# EUROPEAN PATENT SPECIFICATION

(11) **EP 4 590 960 B1**
(45) Date of publication and mention of the grant of the patent: **22.07.2026**
(21) Application number: 23790123.6
(22) Date of filing: 12.09.2023
(51) Int. Cl.: F03D 13/10, F03D 80/50

(54) **ARRANGEMENT AND METHODS FOR INSTALLATION, CONSTRUCTION, REPLACEMENT OF PARTS, OR MAINTENANCE OF A WIND TURBINE**
ANORDNUNG UND VERFAHREN ZUR INSTALLATION, KONSTRUKTION, ZUM AUSTAUSCH VON TEILEN ODER ZUR WARTUNG EINER WINDTURBINE
AGENCEMENT ET PROCÉDÉS D'INSTALLATION, DE CONSTRUCTION, DE REMPLACEMENT DE PIÈCES OU DE MAINTENANCE D'UNE ÉOLIENNE

(30) Priority: 22.09.2022 NO 20221002; 15.12.2022 NO 20221341
(43) Date of publication of application: 30.07.2025
(73) Proprietor: Windspider AS, 4313 Sandnes (NO)
(72) Inventor: VABØ, Petter, 4044 HAFRSFJORD (NO)
(74) Representative: Håmsø Patentbyrå AS
(86) International application number: PCT/NO2023/060047
(87) International publication number: WO 2024/063655

(56) References cited:
- EP-A1- 2 868 914
- EP-B1- 2 144 837
- WO-A1-2021/104677
- US-A1- 2015 300 037
- US-A1- 2019 257 292
- US-A1- 2020 056 592
- US-B2- 10 843 907

## Description

The present invention relates in particular to an arrangement for use in a process of installation, construction, replacement or handling of parts, or maintenance of a wind turbine, and related methods.

A modern wind turbine generally comprises a tower upon which blades connected to a rotary hub are supported on an upper end. The blades are coupled to a generator through a shaft and bearings arrangement at the top of the tower. In use, the blades are caused to turn by the wind which in turn produces rotation of a shaft and allows electricity to be produced by the generator. In addition to the generator, auxiliary equipment, such as a transformer and control and monitoring systems, is typically provided. The top structure, referred to as a nacelle, is typically supported on the tower with bearings, so that the nacelle can be rotated around a vertical axis of the tower and be adjusted to varying wind directions. The blades are coupled to the nacelle.

Wind turbines have developed from small land-based of far less than 1 MW to wind turbines to today's larger turbines of about 10 MW. Apart from differences of scale, the configuration of wind turbines has largely kept to the same general design over many years. Current developments include floating wind turbines capable of producing installed power of up to 15-20 MW. The blades used can be of a length of 100 meters and more.

In today's wind turbines, the blades are typically installed after the nacelle has been mounted on top of the tower structure. The blades are hoisted up by a crane either external to the turbine tower or supported on the turbine tower. During mounting, a blade is typically lifted by the crane using of a lifting yoke to grip and hold the blade in a horizontal position while the blade is being mounted onto the nacelle. Using a crane supported on the turbine tower may be advantageous for installation of wind turbines offshore especially as it minimizes relative motion between the wind tower and the crane. When blades are mounted from a horizontal position, the crane head reaches out from the wind turbine tower to hold the blade in the correct position. This causes the mass centre of the crane with the blade lifted to be shifted away from the turbine tower mass centre. This typically requires installation during calm weather as both wind and waves may cause stress to the crane and the wind turbine tower especially as the blade is lifted high and away from the turbine centre.

It is known to mount blades from a substantially vertical position, holding the blades just below the nacelle. Wires attached to a lower end of the blades are typically used to hold the blade in distance apart from the turbine tower preventing the blades from crashing into the crane tower due to wind and/or waves.

From time to time there may also be a need to install or remove wind turbine parts such as the generator or related components housed in the nacelle, and there can be a need for efficiently and more conveniently bringing the parts up or down from the nacelle on the top of the wind turbine tower which are safer and/or less affected by weather or ocean conditions.

The time intervals for acceptable wave conditions offshore are often very short. Furthermore, installation of offshore wind turbines can be technically demanding and costly. There is hence a need for easy and more robust installation methods especially adapted for offshore use.

Some background art relevant to the present invention is disclosed in WO2022175315 and EP3812337.

At least one aim of the invention is to remedy or reduce one or more drawbacks associated with the prior art.

According to a first aspect, the invention relates to an arrangement for use in a process of installation, construction, replacement or handling of parts, or maintenance of a wind turbine, the arrangement comprising a longitudinal structure at least partially supported on a wind turbine tower, a guide track connected to the longitudinal structure and a dolly arranged to follow the guide track along the longitudinal structure.

The arrangement facilitates elevation of a wind turbine blade or nacelle close to the wind turbine tower. By having the dolly following the guide track, the arrangement prevents relative motion of the wind turbine blade or nacelle during installation. The arrangement furthermore ensures that the mass centre of wind turbine blade or the nacelle is kept close to the wind turbine tower during lifting and mounting. An advantage is that the arrangement extends the time intervals for installation, by enabling installation of wind turbine blades or the nacelle in harsher weather conditions.

The guide track may be arranged to prevent sideways rotation of the dolly. The guide track may comprise two laterally spaced track members to prevent sideways rotation of the dolly. Preventing sideways rotation of the dolly is advantageous in that it increases control of the wind turbine blade during elevation and mounting.

The wind turbine may be a land-based wind turbine or may be an offshore wind turbine. The offshore wind turbine may be a bottom fixed wind turbine or a floating wind turbine.

The longitudinal structure may be fully supported on the wind turbine tower. The longitudinal structure may enclose at least a portion of the wind turbine tower.

The arrangement may comprise an elevation means for elevating the dolly along the longitudinal structure. The elevation means may typically comprise at least one winch and at least one wire. The wire may be suspended from an upper portion of the longitudinal structure. The wire can be passed over a sheave or other support member on the upper portion of the longitudinal structure. An end of the wire can for example be affixed to the dolly with the wire spooled out from a drum of the winch, which may be provided at any convenient location, e.g. at or near an upper end or a lower end of the longitudinal structure. The winch can be mounted on the longitudinal structure. Alternatively, the drum can for example be disposed on the dolly and the end of the wire spooled out from the drum can be connected fixedly to a lower portion of the longitudinal structure. Upon operating the winch and spooling the wire in, the dolly may thus be lifted upward along the longitudinal structure.

The dolly may be used to facilitate in installing a wind turbine part such as a nacelle or a blade. In some examples, the wind turbine part, e.g. the blade or the nacelle, can be supported from above on at least one wire from at least one crane. The dolly can be positioned to laterally support the wind turbine part, e.g. the blade or nacelle being lifted by the crane wire. When the crane is used to lift the wind turbine part, e.g. for positioning the part for installation, the dolly can then be operated using the elevation means to travel along the longitudinal structure in accordance with the lifting or lowering of the wind turbine part by the crane. In this way, the dolly may be positioned to maintain a desired relationship to the wind turbine part as it is moved into place for installation using the crane. This can facilitate in providing desired stability and support for the wind turbine part during installation. Typically, the dolly can follow upward toward an upper portion of the longitudinal structure. Once the dolly has reached an end position, the wind turbine part can then be released from the dolly and moved into final position on one or more wires from the crane only. In certain examples, the crane for lifting the blade or the nacelle may be a crane external to the wind turbine tower. In certain examples, the crane for lifting the blade or the nacelle may be a crane supported on the wind turbine tower.

The dolly may comprise a blade holding means for holding a wind turbine blade. An advantage of the blade holding means is that the dolly easily can be used for lifting and supporting a wind turbine blade during a blade installation process.

The blade holding means may be arranged to change between a first position and a second position, wherein the blade holding means in the first position is configured to hold the wind turbine blade in a substantially horizontal orientation and the blade holding means in the second position is configured to hold the wind turbine blade in a substantially vertical orientation.

Holding the wind turbine blade in a substantially vertical orientation reduces exposure to wind thereby minimizing stress to the elevation means and the longitudinal structure. Also, it enables the mass centre of the wind turbine blade to be kept close to the wind turbine tower during installation.

The dolly may comprise tilt means for tilting the blade holding means about a horizontal axis, wherein a mounting portion of the wind turbine blade is moved closer or further away from the wind turbine tower. This enables fine adjustment of the position of the mounting portion with respect to the nacelle.

The arrangement can include a lifting and handling device on the dolly. The lifting and handling device is typically a crane having at least one crane arm which is typically arranged to extend from the dolly in an elevated position to locate a lifting point of the crane above a nacelle on an upper end of the wind turbine tower. The crane on the dolly may be termed a utility crane.

The dolly can be operable in one configuration in which the dolly is connected to longitudinal structure to follow the guide track longitudinally along a front of the tower, and in another configuration in which the dolly is connected to the longitudinal structure to follow the guide track longitudinally along a side of the tower.

More specifically, the dolly can be rotatably coupled to the longitudinal structure to rotate about the longitudinal axis of the structure between the one configuration and the other configuration. Alternatively, the arrangement can further comprise a platform configured to be supported on the wind turbine tower, and the longitudinal structure is rotatably coupled to the platform for rotating the longitudinal structure with the dolly connected thereto about the longitudinal axis with respect to the platform and thereby moving the dolly between the one configuration and the other configuration. The rotation between the one configuration and the other is typically 90 degrees.

The longitudinal structure may comprise a crane tower or a utility tower. A crane may be supported on top of the crane tower.

According to a second aspect, the invention relates to a method of elevating at least one wind turbine blade, the method comprising providing the arrangement according to the first aspect of the invention, elevating a wind turbine blade along a wind turbine tower by use of the dolly and rotating the blade from the horizontal orientation to a vertical orientation during elevation.

According to a third aspect, the invention relates to a method of elevating a nacelle for mounting to a wind turbine tower, the method comprising providing the arrangement according to the first aspect of the invention, lifting the nacelle by use of crane wires suspended from the crane and supporting the nacelle close to the wind turbine tower by means of the dolly.

According to a fourth aspect, the invention relates to a method of elevating a wind turbine tower section for mounting to a partially constructed wind turbine tower, the method comprising providing the arrangement according to the first aspect of the invention, elevating the wind turbine tower section by use of crane wires suspended from the crane, and supporting the wind turbine tower section close to the wind turbine tower by means of the dolly.

According to a fifth aspect, the invention relates to a method of replacing a part of a nacelle on a wind turbine tower, the method comprising: providing the arrangement according to the first aspect of the invention; elevating the part on the dolly; and using the crane on the dolly to lift the part off the dolly, reach across a region between the dolly and the nacelle, and lower the part onto nacelle. The part can be a generator part. The method may include using the crane on the dolly to reach above the nacelle and remove a part to be replaced.

Any of the first to fifth aspects of the invention may further include any one or more further features or steps as described in relation to any other aspect of the invention, wherever described herein.

There will now be described, by way of example only, embodiments of the invention, with reference to the accompanying drawings, in which:
- Figure 1A: shows a floating wind turbine arrangement for mounting of a wind turbine blade;
- Figure 1B: shows a detailed view of part of Figure 1A showing a dolly holding the wind turbine blade;
- Figure 1C: shows schematically example elevation means for moving the dolly along a longitudinal structure;
- Figure 2: shows the dolly in a first position holding a wind turbine blade horizontally;
- Figure 3: shows the dolly approaching a second position holding a wind turbine blade vertically;
- Figure 4: shows the arrangement when used for installing a nacelle on top of a wind turbine tower, showing the dolly and nacelle in two positions A and B;
- Figure 5: is a perspective representation of another floating wind turbine arrangement used for lifting and handling wind turbine parts to be inserted into or removed from the inside of the nacelle housing;
- Figure 6: is a side view representation of the arrangement of Figure 5;
- Figure 7: is a top view representation of the arrangement of Figures 5 and 6 with the dolly in a first position, prior to use; and
- Figure 8: is a top view representation of the arrangement of Figures 5 and 6 with the dolly in a second position, for travel up/down along the longitudinal structure.

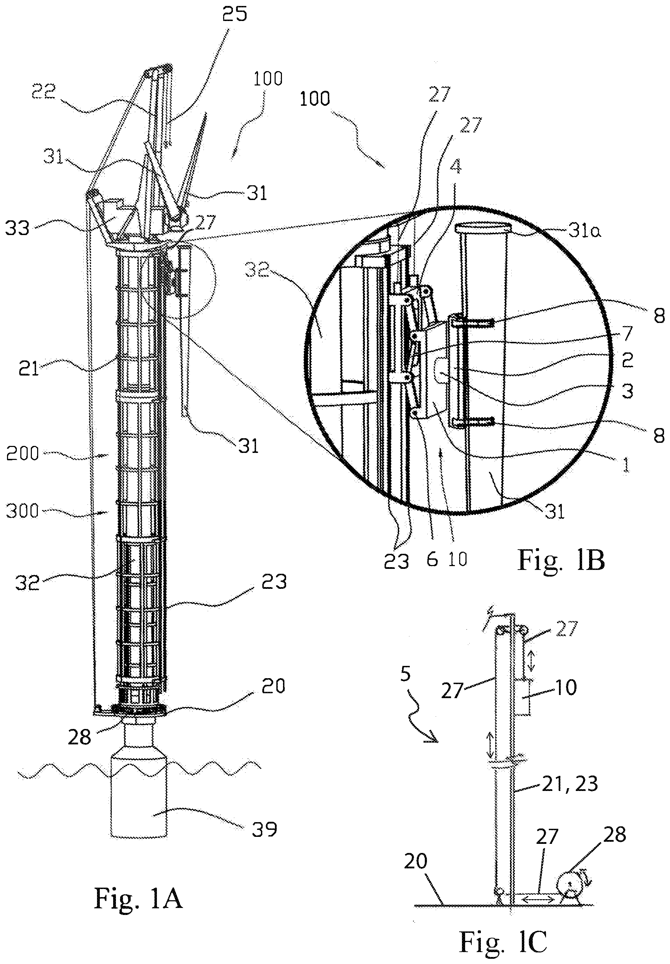

Figures 1A and 1B show an installation arrangement 100 for an offshore wind turbine 300. The wind turbine 300 comprises a turbine tower 32 and is shown with a crane arrangement 200 comprising a crane tower 21 with a crane 22 attached on top. The crane tower 21 is supported on and surrounds the wind turbine tower 32.

The installation arrangement 100 comprises a vertical support structure, in this example comprising the crane tower 21, and a dolly 10 for carrying the turbine blades 31 upward along the crane tower 21. As seen in further detail in Figure 1C, the installation arrangement 100 further comprises an elevation means 5. The elevation means 5 includes a winch 28 with winch wires 27 attached to the dolly 10. The crane tower 21 further comprises a longitudinal guide track 23 on the outside of the crane tower 21, and supported on the crane tower 21, as part of the crane tower 21. The guide track 23 is arranged to guide the dolly 10 along the turbine tower 32 while the dolly 10 is elevated by the elevation means 5, i.e. pulled upward by spooling in the winch wires 27. Furthermore, the dolly 10 comprises blade holding means 2 for holding a wind turbine blade 31. The winch 28 of the elevation means 5 in certain examples is conveniently located on the crane tower 21, e.g. mounted to an upper portion of the crane tower, or on the structure of the crane 22 itself.

During installation of the wind turbine blade 31, the dolly 10 is lowered using the elevation means 5 along the turbine tower 32, i.e. by spooling out the winch wires 27. The dolly 10 is guided by the longitudinal track 23. The blade holding means 2 is activated to engage and hold the wind turbine blade 31. The dolly 10 with the turbine blade 31 is then elevated by the elevation means 5 along the turbine tower 32. The turbine blade 31 can thereafter be mounted to a nacelle 33 on top of the turbine tower 32 while being supported by the dolly 10. During the mounting operation, advantageously, by way of installation arrangement 100 with the guide track 23, the dolly 10 is secured and positioned close to the crane tower 21.

The crane 22 does not necessarily need to be used for such blade installation, because the dolly 10 can be configured to position the blade root adjacent to the nacelle as necessary for connection to be made. The crane 22 however is typically used when installing a wind turbine tower section or the nacelle. The tower section or the nacelle during installation may then initially be connected to and suspended on crane wires 25, and then either lowered to the base of the tower directly from the crane 22 or onto the dolly 10.

The installation arrangement 100, the crane arrangement 200 and the wind turbine 300 will now be explained in more detail.

The wind turbine 300 comprises a floating base 39 and a wind turbine tower 32 with a nacelle 33 disposed on top. The nacelle 33 is shown with two blades 31 fixed thereto. The figure further shows a crane arrangement 200 enclosing the wind turbine tower 32.

The crane arrangement 200 is shown supported on the wind turbine tower 32. The crane arrangement 200 comprises a platform 20, the crane tower 21 and the crane 22. The platform 20 is clamped to the wind turbine tower 32 at or near a lower end of the wind turbine tower 32. The crane tower 21 is supported on the platform 20 and comprises a cylindrical structure surrounding a circumference of the turbine tower 32. The crane 22 is mounted to an upper end of the crane tower 21. The dolly 10 supported by the vertical support structure is shown in Figures 1A and 1B holding a blade 31 by use of the blade holding means 2 in a substantially vertical position close to the nacelle 33. The vertical support structure enables the dolly 10 to travel close to the wind turbine tower 21 as it carries the blade 31 up towards the nacelle 33.

It can be appreciated that platform 20 in other variants can be mounted on the wind turbine tower 32 in other ways than by clamping. In certain other examples, the platform 20 is mounted on the floating base 39. In examples of wind turbines located onshore, the ground or another foundation replaces the platform. In further examples onshore, the platform rests directly on the ground or other foundation without being mounted to wind turbine tower.

In the process of installing several wind turbine blades 31, the dolly 10 moves down along the crane tower 21, engages the blade holding means 2 to a wind turbine blade 31 arranged in a horizontal position, lifts the blade 31 while gradually rotating the blade 31 to a vertical position while moving up towards the nacelle 33. The dolly 10 holds the blade in a substantially vertical position up against the nacelle 33 while the blade 31 is fixedly mounted to the nacelle 33. The dolly 10 can then be released from the blade 31 by disengaging the blade holding means 2 and travel down and to engage to another blade 31.

The dolly 10 will now be described in more detail with reference to Figure 1B and 1C.

The dolly 10 comprises a main body 1 and the blade holding means 2 comprising one or more pairs of clamp members 8 (two pairs shown) for gripping and holding a wind turbine blade 31. The blade holding means 2 is coupled to the main body 1 through a rotatable connection 3. The rotatable connection 3 is arranged to rotate the blade holding means 2 about a horizontal axis, so that when holding a blade 31, the blade 31 can be rotated between a horizontal orientation and a vertical orientation.

The rotatable connection 3 can comprises an axle between the main body 1 and the blade holding means 2. The axle can have a substantially horizontal direction pointing outwardly from the wind turbine tower 32.

The dolly 10 further comprises a track follower 4 attached to the main body 1 and arranged to follow the longitudinal guide track 23 on the crane tower 21. The guide track 23 extends vertically along an outside of the crane tower 21 between the platform 20 and the nacelle 33. The track follower 4 provides a sliding or rolling engagement of the dolly 10 to the guide track 23, thereby allowing the dolly 10 to travel along the crane tower 21 while being secured to the crane tower 21. Winch wires 27 are engaged to an upper portion of the guide follower 4, so that the dolly 10 can be elevated by use of the winch 28. A power cable (not shown) further connects a power supply (not shown) on the platform 20 to the dolly 10 for e.g., providing power for rotating the blade holding means 2 and operating the blade holding means 2 to grip and hold the blade 31. The winch 28 controlling the wires 27 can be positioned at or close to the platform 20.

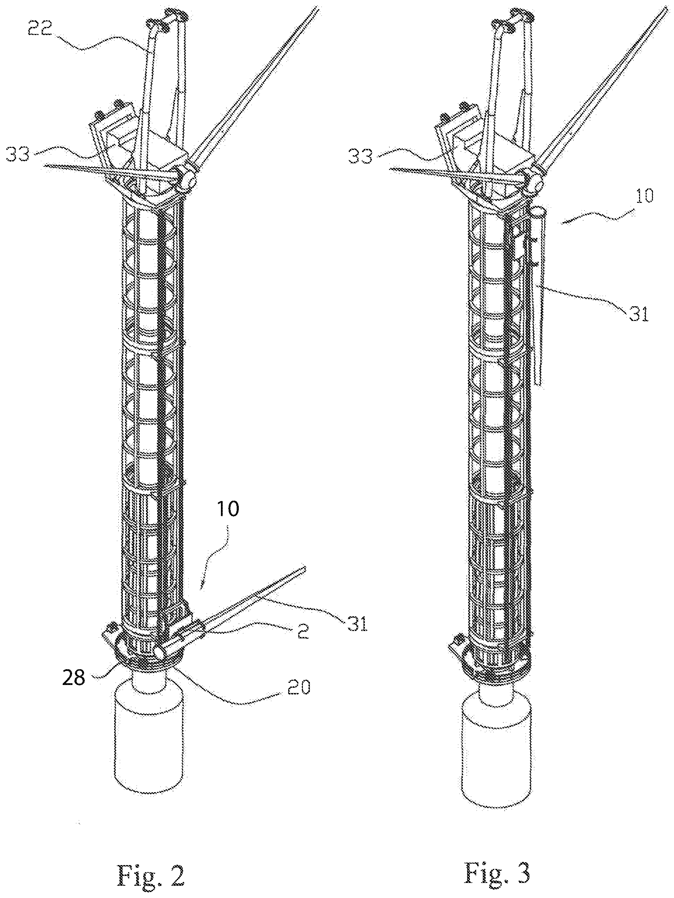

Figure 2 shows the dolly 10 in a first position, wherein the blade holding means 2 has a horizontal orientation close to the platform 20. To engage with a turbine blade 31, the clamp members 8 are opened to allow a turbine blade 31 to be horizontally inserted and the clamps to be closed. Insertion of the turbine blades into the blade holding means 2 may be facilitated by an external vessel or a moveable rack (not shown) arranged on the platform 20 for holding and feeding the dolly 10 with turbine blades 31. The dolly 10 with the turbine blade 31 attached is then elevated by use of the elevation means 5. As the dolly 10 is elevated towards the nacelle 33, the blade holding means 2 is rotated to direct the turbine blade 31 vertically. Figure 3 shows the dolly 10 approaching a second position wherein the turbine blade 31 is held up against the nacelle 33 so that the turbine blade 31 can be mounted thereto.

Referring back to Figure 1B, the dolly 10 comprises eight hinged connections 6 (only five shown) between the guide follower 4 and the main body 1. Two pistons 7 (one shown) is provided to tilt the main body 1 with the blade holding means 2 fixed thereto. Hence, by use of the pistons 7, the turbine blades 31 may be slightly tilted. In this way, a mounting portion 31a of the turbine blades 31 may be moved closer or further away from the wind turbine tower 32 so as to facilitate alignment of the mounting portion 31a with the nacelle 33. The number of hinged connections 6 and/or pistons 7 may vary in other examples.

In other examples, the elevation means 5 can be configured differently and can for example comprise a rack and pinion drive mechanism for elevation of the dolly 10 along the longitudinal structure 23.

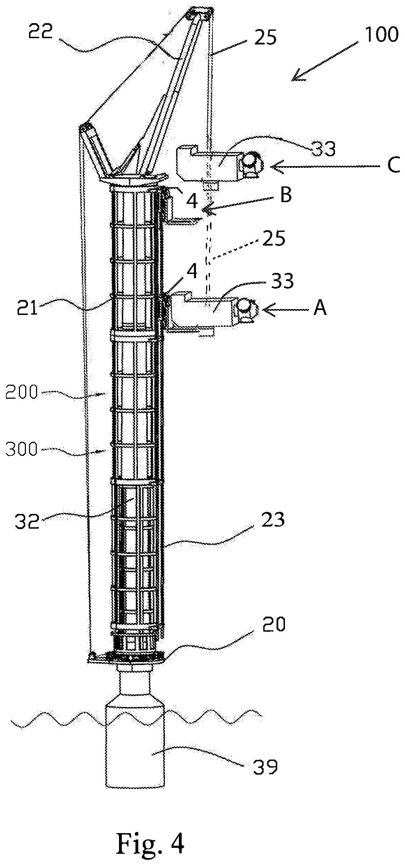

The arrangement 100 described above, can with a few modifications also be used to facilitate installation of the nacelle 33. An example of this is shown in Figure 4. Crane wires 25 are connected to the nacelle 33. The dolly 10 facilitates lateral support and/or positioning of the nacelle 33. However, since the nacelle 33 is of significant size and weight, the weight of the nacelle 33 is predominantly taken by the crane 22 and crane wires 25 in tension from the crane 22. The nacelle 33 is lifted by the crane 22 by use of the crane wires 25. The dolly 10 is controlled actively by a separate drive mechanism (i.e. the elevation means 5. Whilst lifting the nacelle 33 with the crane 22, the dolly 10 travels with the nacelle 3 upward along the crane tower and keeps the nacelle positioned with respect to the crane tower 22. For example, the dolly 10 is provided with members or couplings or otherwise configured to prevent uncontrolled lateral movement of the nacelle 33 so that it is positioned close to the wind turbine tower 32 during lifting along the tower. During elevation therefore, the nacelle 33 is suspended from the crane 22 and the dolly 10 minimizes relative lateral movement of the nacelle 33 relative to the crane tower 22. As the nacelle 33 is lifted, the dolly 10 travels from position A to its end position B at an upper part of the crane tower. At the end position B, there remains only a short distance of the lift in order to position the nacelle 33 for connection to the wind turbine tower. If the dolly 10 is coupled to the nacelle 33 during the earlier phase of the lift, the dolly 10 is decoupled, so as to release the nacelle 33 from the dolly 10. The crane 22 then lifts the nacelle 33 away from the dolly 10, as seen at position C, and then into position for connection to the wind turbine tower 32.

Similarly, the arrangement 100 of Figure 4 may be used in the process of erecting the wind turbine tower 32, to help in lifting and supporting a wind turbine tower section by means of the crane 22 and the dolly 10.

The apparatus and methods described herein can be used as a part of an installation, construction, replacement or maintenance process of a wind turbine 300.

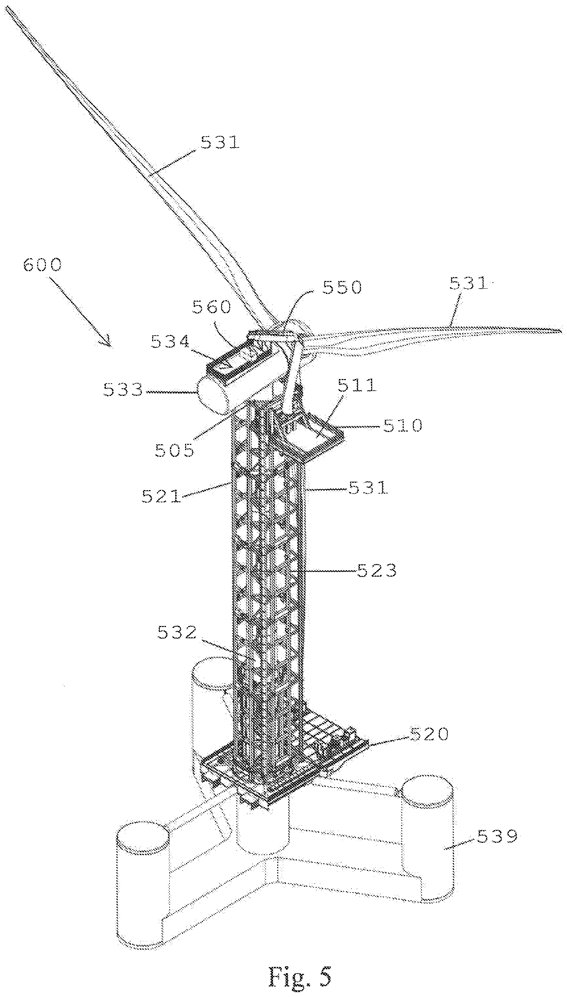

Turning now to Figures 5 to 8, there is depicted generally at 600 another arrangement for a floating wind turbine. In this example, the arrangement 600 is used for lifting and/or handling wind turbine parts, such as parts that may need to be inserted into or removed from an inside of the nacelle 633.

The arrangement 600 has numerous features in common with the arrangement 100 described above. Features corresponding to those described above in relation to Figures 1 to 4 are denoted using the same reference numerals incremented by five hundred.

The wind turbine arrangement 600 includes a vertical support structure in the form of utility tower 521 which is arranged around and supported upon the wind turbine tower 532. Apart from the provision of the crane 22, the utility tower 521 is the same as or similar to the crane tower 21 as described above. The utility tower 521 thus includes the longitudinal guide track 523 on the outside of the utility tower 521, and supported on the utility tower 521 as part of the utility tower 521. The tower 521 and platform 520 are in this example supported on the base 539.

The arrangement 600 further includes the dolly 510 which is coupled to the utility tower 521 and is arranged to travel upward or downward along the utility tower 521 guided by the guide track 523. The dolly 510 can thus be elevated to a desired elevation along the utility tower 521. Suitable elevation means are used for moving and elevating the dolly to a position along the tower. The elevation means are provided in this example comprising a wire 505 which is connected at one end to the dolly 510, and which passes over a supporting member of the utility tower 521, to a winch on the platform 520 for spooling the wire 505 in or out to move the dolly 510 appropriately along the track 523.

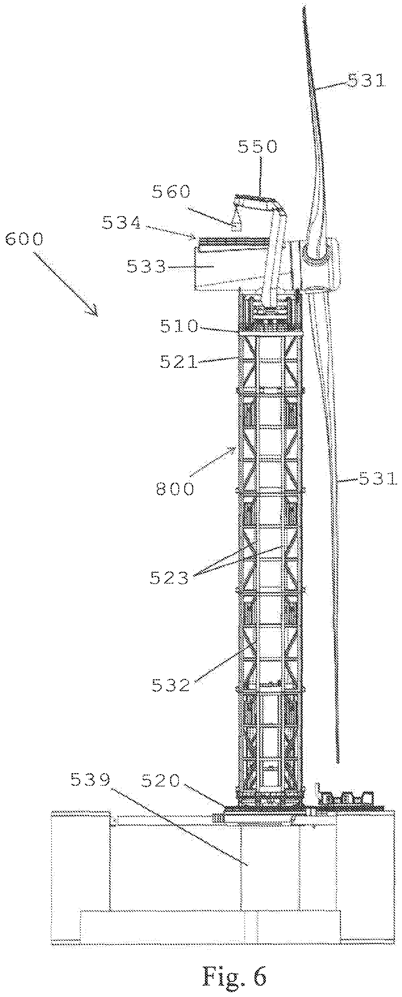

The dolly 510 in this example has a lifting and handling device in the form of a small utility crane 550 fitted thereto for carrying out lifting and handling operations. In Figures 5 and 6, the utility crane 550 is shown lifting a wind turbine part 560 which is to be inserted or removed from the nacelle 533. This part 560 is for example a wind turbine generator part which is to be housed inside the nacelle 533. The dolly 510 also has a platform 511 where wind turbine parts can be located e.g. during travel along the tower. For example, a part removed from the nacelle can carried downward along the utility tower 521 on the dolly 510. A part to be inserted in the nacelle 533 can be carried upward along the utility tower 521 on the dolly 510. With the dolly 510 in an upper position such as seen in Figures 5 and 6, the crane 550 can lift the part off the platform 511 and into the nacelle, and vice versa. The crane 550 has one or more arms which can reach laterally so that a suspension point of the arm is arranged above the nacelle and can facilitate to lower/raise the part suspended on a crane wire from the suspension point, in this example through an access opening 534.

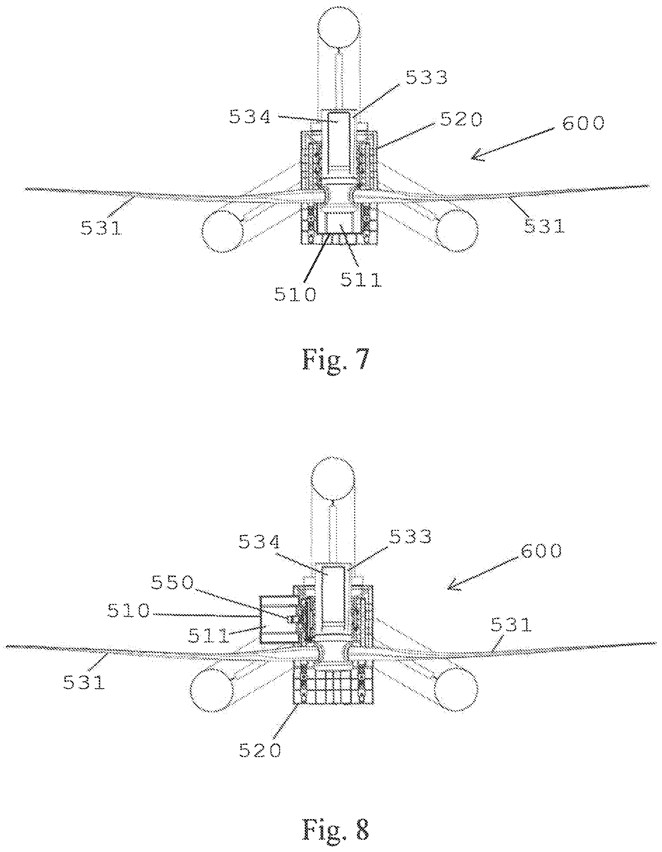

With reference to Figures 7 and 8, the dolly 510 is positioned at or near the base of the utility tower 521. In Figure 7, the dolly 510 is arranged at the front of the utility tower 521, with the platform 511 extending from the utility tower 521 forward of the arrangement of the blades. In Figure 8, the dolly 510 is arranged at one side of the utility tower 521 with the platform extending outward from the side. The dolly 510 can therefore be repositioned from the position of Figure 7 to that of Figure 8 before the dolly 510 is used with the utility crane 550 and can travel up/down the utility tower 521 along the longitudinal track 23. With the dolly 510 in the front position as seen in Figure 7, the dolly can first be used in the manner described in relation to Figures 1 to 4 above to facilitate in installing the blades and/or nacelle. With the dolly 510 in the side position as seen in Figure 8, the dolly can be used in the manner described in relation to Figures 5 and 6 with a utility crane 550 on the dolly 510 to facilitate in lifting parts onto or off the nacelle 533. Using the dolly 510 with the utility crane 550 in the side position can facilitate access to the nacelle 533 from the side without rotating the nacelle 533 and blades 531 with respect to the wind turbine tower 532.

The utility tower 521 in this example has a rotational coupling to the platform 520 so as to be rotatable with respect to the platform 520 and the wind turbine tower 532. The utility tower 521 is in this way rotatable 90 degrees about a vertical axis. The rotational coupling is for example a slew ring coupling or the like. The dolly 510 may be mounted on the utility tower 521 and moved with utility tower 521 as it is rotated from the front position of Figure 7 to the side position of Figure 8.

In various examples however, the dolly 510 with the utility crane 550 is used in the front position as seen in Figure 8, before the nacelle 533 is then rotated so that raising the dolly 510 along the track 23 to the upper position the dolly is arranged to the side of the nacelle 533.

Although the arrangement 600 is described above in relation to a floating wind turbine, this is alternatively used for a bottom-fixed wind turbine, or an onshore wind turbine.

## Claims

1. An arrangement (100, 600) for use in a process of installation, construction, replacement or handling of parts, or maintenance of a wind turbine, the arrangement comprising:
- a crane tower (21, 521) supported on and surrounding a wind turbine tower (32, 532), the crane tower (21, 521) comprising:
- a longitudinal guide track (23, 523) on the outside of the crane tower (21, 521), and supported on the crane tower (21, 521), as part of the crane tower (21, 521); and
- a dolly (10, 510) arranged to follow the guide track (23, 523) along the wind turbine tower (32, 532).

2. The arrangement (100, 600) according to claim 1, further comprising an elevation means (5) for elevating the dolly (10, 510) along the crane tower (21), wherein optionally:
the elevation means (5) comprises at least one winch (28) and at least one wire (27, 505), and further optionally:
the at least one winch is located on the crane tower; and/or
the elevation means comprises a crane wire (25) and at least one crane (22, 550).

3. The arrangement (100, 600) according to any one of the preceding claims, wherein the dolly (10, 510) comprises a blade holding means (2) for holding a wind turbine blade (31, 531).

4. The arrangement (100, 600) according to claim 3, wherein the blade holding means (2) is arranged to move between a first position and a second position, wherein the blade holding means (2) in the first position is configured to hold the wind turbine blade (31, 531) in a substantially horizontal orientation and the blade holding means (2) in the second position is configured to hold the wind turbine blade (31, 531) in a substantially vertical orientation.

5. The arrangement (100, 600) according to claim 3 or claim 4 wherein the dolly (10, 510) comprises tilt means (7) for tilting the blade holding means (2) about a horizontal axis, wherein a mounting portion (31a) of the wind turbine blade (31, 531) is moved closer or further away from the wind turbine tower (32, 532).

6. The arrangement (600) according to any one of the preceding claims, further comprising a lifting and handling device (550) on the dolly (510).

7. The arrangement (600) according to claim 6, wherein the lifting and handling device (550) is a crane (550) having at least one crane arm which is arranged to extend from the dolly (510) in an elevated position to a lifting point of the crane above a nacelle (533) on an upper end of the wind turbine tower (521).

8. The arrangement (100, 600) according to any preceding claim, wherein dolly (10, 510) is operable in one configuration in which the dolly (10, 510) is connected to the crane tower (21, 521) to follow the guide track (23, 523) longitudinally along a front of the tower (21, 521), and in another configuration in which the dolly (10, 510) is connected to the crane tower (21, 521) to follow the guide track (23, 523) longitudinally along a side of the crane tower (21, 521), wherein optionally:
the arrangement further comprises a platform (20, 520) configured to be supported on the wind turbine tower (32, 532), and the crane tower (21, 521) is rotatably coupled to the platform (20, 520) for rotating the crane tower (21, 521) with the dolly (10, 510) connected thereto about the longitudinal axis with respect to the platform (20, 520) and thereby moving the dolly (10, 510) between the one configuration and the other configuration, and further optionally rotation between the one configuration and the other is 90 degrees.

9. The arrangement (100, 600) according to any one of the preceding claims, wherein a crane (22, 550) is supported on top of the crane tower (21, 521).

10. A method of elevating at least one wind turbine blade (31), the method comprising:
- providing the arrangement (100, 600) according to any one of the preceding claims;
- elevating a wind turbine blade (31) along a wind turbine tower (32, 532) by use of the dolly (10, 510); and
- rotating the blade (31) from the horizontal position to a vertical position during elevation of the wind turbine blade (31).

11. A method of elevating a nacelle (33, 533) for mounting to a wind turbine tower (32, 532), the method comprising:
- providing the arrangement (100, 600) according to any one of claims 1 to 9;
- elevating a nacelle (33, 533) by use of crane wires (25) suspended from a crane (21, 550); and
- supporting the nacelle (33, 533) close to the wind turbine tower (32, 532) by means of the dolly (10, 510).

12. A method of elevating a wind turbine tower section for mounting to a partially constructed wind turbine tower (32, 532), the method comprising:
- providing the arrangement (100, 600) according to any one of claims 1-9;
- elevating a wind turbine tower section by use of crane wires (25) suspended from a crane (22, 550) ; and
- supporting the wind turbine tower section close to the wind turbine tower (32, 532) by means of the dolly (10, 510).

13. A method of replacing a part (560) of a nacelle (533) on a wind turbine tower (532), the method comprising:
- providing the arrangement (600) according to claim 6 or 7;
- elevating a part (560) on the dolly (510); and
- using a crane (550) on the dolly (510) to lift the part (560) off the dolly (510), reach across a region between the dolly (510) and the nacelle (533), and lower the part (560) onto nacelle (533).

14. The method according to claim 13, further including using the crane (550) on the dolly (510) to reach above the nacelle (533) and remove the part (560).

15. The method according to claim 13 or claim 14, wherein the part (560) is a generator part.

## Patentansprüche

1. Anordnung (100, 600) zur Verwendung bei einem Prozess der Installation, Konstruktion, des Austausches oder der Handhabung von Teilen oder der Wartung einer Windturbine, wobei die Anordnung Folgendes umfasst:
- einen Kranturm (21, 521), der auf einem Windturbinenturm (32, 532) gestützt ist und diesen umgibt, wobei der Kranturm (21, 521) Folgendes umfasst:
- eine Längsführungsschiene (23, 523) an der Außenseite des Kranturms (21, 521), und die auf dem Kranturm (21, 521) gestützt ist, als Teil des Kranturms (21, 521); und
- einen Laufwagen (10, 510), der angeordnet ist, um der Führungsschiene (23, 523) entlang des Windturbinenturms (32, 532) zu folgen.

2. Anordnung (100, 600) nach Anspruch 1, weiter umfassend ein Hebemittel (5) zum Heben des Laufwagens (10, 510) entlang des Kranturms (21), wobei optional:
das Hebemittel (5) mindestens eine Winde (28) und mindestens ein Seil (27, 505) umfasst, und weiter optional:
die mindestens eine Winde am Kranturm angeordnet ist; und/oder
das Hebemittel ein Kranseil (25) und mindestens einen Kran (22, 550) umfasst.

3. Anordnung (100, 600) nach einem der vorstehenden Ansprüche, wobei der Laufwagen (10, 510) ein Rotorblatthaltemittel (2) zum Halten eines Windturbinenrotorblatts (31, 531) umfasst.

4. Anordnung (100, 600) nach Anspruch 3, wobei das Rotorblatthaltemittel (2) angeordnet ist, um sich zwischen einer ersten Position und einer zweiten Position zu bewegen, wobei das Rotorblatthaltemittel (2) in der ersten Position konfiguriert ist, um das Windturbinenrotorblatt (31, 531) in einer im Wesentlichen horizontalen Orientierung zu halten, und das Rotorblatthaltemittel (2) in der zweiten Position konfiguriert ist, um das Windturbinenrotorblatt (31, 531) in einer im Wesentlichen vertikalen Orientierung zu halten.

5. Anordnung (100, 600) nach Anspruch 3 oder Anspruch 4, wobei der Laufwagen (10, 510) ein Kippmittel (7) zum Kippen des Rotorblatthaltemittels (2) um eine horizontale Achse umfasst, wobei ein Montageabschnitt (31a) des Windturbinenrotorblatts (31, 531) näher an den Windturbinenturm (32, 532) heran oder von diesem weg bewegt wird.

6. Anordnung (600) nach einem der vorstehenden Ansprüche, weiter umfassend eine Hebe- und Handhabungsvorrichtung (550) auf dem Laufwagen (510).

7. Anordnung (600) nach Anspruch 6, wobei die Hebe- und Handhabungsvorrichtung (550) ein Kran (550) ist, aufweisend mindestens einen Kranarm, der angeordnet ist, um sich vom Laufwagen (510) in einer angehobenen Position zu einem Hebepunkt des Krans über einer Gondel (533) an einem oberen Ende des Windturbinenturms (521) zu erstrecken.

8. Anordnung (100, 600) nach einem vorstehenden Anspruch, wobei der Laufwagen (10, 510) in einer Konfiguration betreibbar ist, in der der Laufwagen (10, 510) mit dem Kranturm (21, 521) verbunden ist, um der Führungsschiene (23, 523) in Längsrichtung entlang einer Vorderseite des Turms (21, 521) zu folgen, und in einer anderen Konfiguration, in der der Laufwagen (10, 510) mit dem Kranturm (21, 521) verbunden ist, um der Führungsschiene (23, 523) in Längsrichtung entlang einer Seite des Kranturms (21, 521) zu folgen, wobei optional:
die Anordnung weiter eine Plattform (20, 520) umfasst, die konfiguriert ist, um auf dem Windturbinenturm (32, 532) gestützt zu werden, und der Kranturm (21, 521) drehbar mit der Plattform (20, 520) gekoppelt ist, zum Drehen des Kranturms (21, 521) mit dem daran gekoppelten Laufwagen (10, 510) um die Längsachse in Bezug auf die Plattform (20, 520) und dadurch den Laufwagen (10, 510) zwischen der einen Konfiguration und der anderen Konfiguration zu bewegen, und weiter optional ist die Drehung zwischen der einen Konfiguration und der anderen 90 Grad.

9. Anordnung (100, 600) nach einem der vorstehenden Ansprüche, wobei ein Kran (22, 550) oben auf dem Kranturm (21, 521) gestützt ist.

10. Verfahren zum Anheben mindestens eines Windturbinenrotorblatts (31), wobei das Verfahren Folgendes umfasst:
- Bereitstellen der Anordnung (100, 600) nach einem der vorstehenden Ansprüche;
- Anheben eines Windturbinenrotorblatts (31) entlang eines Windturbinenturms (32, 532) durch Verwendung des Laufwagens (10, 510); und
- Drehen des Rotorblatts (31) aus der horizontalen Position in eine vertikale Position während des Anhebens des Windturbinenrotorblatts (31).

11. Verfahren zum Anheben einer Gondel (33, 533) zum Montieren an einem Windturbinenturm (32, 532), wobei das Verfahren Folgendes umfasst:
- Bereitstellen der Anordnung (100, 600) nach einem der Ansprüche 1 bis 9;
- Anheben einer Gondel (33, 533) durch Verwendung von Kranseilen (25), die an einem Kran (21, 550) aufgehängt sind; und
- Stützen der Gondel (33, 533) in der Nähe des Windturbinenturms (32, 532) mittels des Laufwagens (10, 510).

12. Verfahren zum Anheben einer Windturbinenturmsektion zum Montieren an einem teilweise konstruierten Windturbinenturm (32, 532), wobei das Verfahren Folgendes umfasst:
- Bereitstellen der Anordnung (100, 600) nach einem der Ansprüche 1-9;
- Anheben einer Windturbinenturmsektion durch Verwendung von Kranseilen (25), die an einem Kran (22, 550) aufgehängt sind; und
- Stützen der Windturbinenturmsektion in der Nähe des Windturbinenturms (32, 532) mittels des Laufwagens (10, 510).

13. Verfahren zum Austauschen eines Teils (560) einer Gondel (533) an einem Windturbinenturm (532), wobei das Verfahren Folgendes umfasst:
- Bereitstellen der Anordnung (600) nach Anspruch 6 oder 7;
- Anheben eines Teils (560) auf dem Laufwagen (510); und
- Verwenden eines Krans (550) auf dem Laufwagen (510), um das Teil (560) vom Laufwagen (510) zu heben, über einen Bereich zwischen dem Laufwagen (510) und der Gondel (533) zu reichen, und das Teil (560) auf die Gondel (533) abzusenken.

14. Verfahren nach Anspruch 13, weiter einschließlich des Verwendens des Krans (550) auf dem Laufwagen (510), um über die Gondel (533) zu reichen und das Teil (560) zu entfernen.

15. Verfahren nach Anspruch 13 oder Anspruch 14, wobei das Teil (560) ein Generatorteil ist.

## Revendications

1. Agencement (100, 600) destiné à être utilisé dans un processus d'installation, de construction, de remplacement ou de manutention de pièces, ou de maintenance d'une éolienne, l'agencement comprenant :
- un mât de grue (21, 521) supporté sur un mât d'éolienne (32, 532) et entourant celui-ci, le mât de grue (21, 521) comprenant :
- un rail de guidage longitudinal (23, 523) sur l'extérieur du mât de grue (21, 521), et supporté sur le mât de grue (21, 521), en tant que partie du mât de grue (21, 521) ; et
- un chariot (10, 510) conçu pour suivre le rail de guidage (23, 523) le long du mât d'éolienne (32, 532).

2. Agencement (100, 600) selon la revendication 1, comprenant en outre un moyen d'élévation (5) pour élever le chariot (10, 510) le long du mât de grue (21), dans lequel facultativement :
le moyen d'élévation (5) comprend au moins un treuil (28) et au moins un câble (27, 505), et facultativement en outre :
l'au moins un treuil est situé sur le mât de grue ; et/ou
le moyen d'élévation comprend un câble de grue (25) et au moins une grue (22, 550).

3. Agencement (100, 600) selon l'une quelconque des revendications précédentes, dans lequel le chariot (10, 510) comprend un moyen de maintien de pale (2) pour maintenir une pale d'éolienne (31, 531).

4. Agencement (100, 600) selon la revendication 3, dans lequel le moyen de maintien de pale (2) est conçu pour se déplacer entre une première position et une deuxième position, dans lequel
le moyen de maintien de pale (2) dans la première position est configuré pour maintenir la pale d'éolienne (31, 531) dans une orientation sensiblement horizontale et le moyen de maintien de pale (2) dans la deuxième position est configuré pour maintenir la pale d'éolienne (31, 531) dans une orientation sensiblement verticale.

5. Agencement (100, 600) selon la revendication 3 ou la revendication 4 dans lequel le chariot (10, 510) comprend un moyen d'inclinaison (7) pour incliner le moyen de maintien de pale (2) autour d'un axe horizontal, dans lequel
une partie de montage (31a) de la pale d'éolienne (31, 531) est déplacée plus près ou plus loin du mât d'éolienne (32, 532).

6. Agencement (600) selon l'une quelconque des revendications précédentes, comprenant en outre un dispositif de levage et de manutention (550) sur le chariot (510).

7. Agencement (600) selon la revendication 6, dans lequel
le dispositif de levage et de manutention (550) est une grue (550) présentant au moins un bras de grue qui est conçu pour s'étendre depuis le chariot (510) dans une position élevée jusqu'à un point de levage de la grue au-dessus d'une nacelle (533) sur une extrémité supérieure du mât d'éolienne (521).

8. Agencement (100, 600) selon une quelconque revendication précédente, dans lequel
le chariot (10, 510) peut fonctionner dans une configuration dans laquelle le chariot (10, 510) est relié au mât de grue (21, 521) pour suivre le rail de guidage (23, 523) longitudinalement le long d'une face avant du mât (21, 521), et
dans une autre configuration dans laquelle le chariot (10, 510) est relié au mât de grue (21, 521) pour suivre le rail de guidage (23, 523) longitudinalement le long d'un côté du mât de grue (21, 521), dans lequel facultativement :
l'agencement comprend en outre une plateforme (20, 520) configurée pour être supportée sur le mât d'éolienne (32, 532), et
le mât de grue (21, 521) est accouplé rotatif à la plateforme (20, 520) pour faire tourner le mât de grue (21, 521) avec le chariot (10, 510) relié à celui-ci autour de l'axe longitudinal par rapport à la plateforme (20, 520) et ainsi
déplacer le chariot (10, 510) entre ladite configuration et l'autre configuration, et facultativement en outre la rotation entre une configuration et l'autre est de 90 degrés.

9. Agencement (100, 600) selon l'une quelconque des revendications précédentes, dans lequel une grue (22, 550) est supportée au sommet du mât de grue (21, 521).

10. Procédé d'élévation d'au moins une pale d'éolienne (31), le procédé consistant à :
- fournir l'agencement (100, 600) selon l'une quelconque des revendications précédentes ;
- élever une pale d'éolienne (31) le long d'un mât d'éolienne (32, 532) en utilisant le chariot (10, 510) ; et
- faire tourner la pale (31) de la position horizontale à une position verticale pendant l'élévation de la pale d'éolienne (31).

11. Procédé d'élévation d'une nacelle (33, 533) pour un montage sur un mât d'éolienne (32, 532), le procédé consistant à :
- fournir l'agencement (100, 600) selon l'une quelconque des revendications 1 à 9 ;
- élever une nacelle (33, 533) en utilisant des câbles de grue (25) suspendus à une grue (21, 550) ; et
- supporter la nacelle (33, 533) à proximité du mât d'éolienne (32, 532) au moyen du chariot (10, 510).

12. Procédé d'élévation d'une section de mât d'éolienne pour un montage sur un mât d'éolienne partiellement construit (32, 532), le procédé consistant à :
- fournir l'agencement (100, 600) selon l'une quelconque des revendications 1 à 9 ;
- élever une section de mât d'éolienne en utilisant des câbles de grue (25) suspendus à une grue (22, 550) ; et
- supporter la section de mât d'éolienne à proximité du mât d'éolienne (32, 532) au moyen du chariot (10, 510).

13. Procédé de remplacement d'une pièce (560) d'une nacelle (533) sur un mât d'éolienne (532), le procédé consistant à :
- fournir l'agencement (600) selon la revendication 6 ou 7 ;
- élever une pièce (560) sur le chariot (510) ; et
- utiliser une grue (550) sur le chariot (510) pour soulever la pièce (560) hors du chariot (510), parcourir une région entre le chariot (510) et la nacelle (533), et abaisser la pièce (560) sur la nacelle (533).

14. Procédé selon la revendication 13, incluant en outre l'utilisation de la grue (550) sur le chariot (510) pour atteindre le dessus de la nacelle (533) et retirer la pièce (560).

15. Procédé selon la revendication 13 ou la revendication 14, dans lequel la pièce (560) est une pièce de générateur.
